# EUROPÄISCHE PATENTSCHRIFT

(11) **EP 1 010 657 B1**
(45) Veröffentlichungstag und Bekanntmachung des Hinweises auf die Patenterteilung: **13.08.2003**
(21) Anmeldenummer: 99120636.8
(22) Anmeldetag: 18.10.1999
(51) Int. Cl.: B65H 51/16

(54) **Fadeneinblasventil**
Yarn injection valve
Soupape d'injection de fil

(30) Priorität: 11.11.1998 DE 19851957
(43) Veröffentlichungstag der Anmeldung: 21.06.2000
(73) Patentinhaber: Memminger-IRO GmbH, 72280 Dornstetten (DE)
(72) Erfinder: Wörner, Christoph, 72270 Baiersbronn (DE)
(74) Vertreter: Patentanwälte Rüger, Barthelt & Abel

(56) Entgegenhaltungen:
- EP-A- 0 454 141
- FR-A- 1 045 449
- GB-A- 2 019 450
- US-A- 5 323 982

## Beschreibung

Die Erfindung betrifft ein Fadeneinblasventil, insbesondere zum Einführen von textilen Fäden in Fadenleitrohre, wie sie zur Überführung von Fäden von einem Spulengatter zu einer Textilmaschine vorgesehen sein können.

Zur Bereitstellung von Fäden für Textilmaschinen dienen häufig Spulengatter, die in der Regel eine größere Anzahl Garnspulen tragen. Von jeder Garnspule läuft ein Faden zu der Textilmaschine, die mit den Fäden zu versorgen ist. Zur Führung der Fäden werden häufig Rohre verwendet, wobei durch jedes Rohr jeweils ein Faden läuft. Jedes Rohr kann mehrere Meter lang sein. Die Fäden werden meist mit Druckluft in diese Rohre eingezogen.

Dazu ist z.B. aus der EP-A-0 454 141 (US-A-5.024.393) ein Fadeneinblasventil bekannt. Dem offenen Ende eines Fadenleitrohres gegenüberliegend ist eine Luftdüse angeordnet, aus der von einem Ventil gesteuert Druckluft ausgelassen werden kann, die den Faden dann in das Fadenleitrohr spült. Das Fadeneinblasventil liegt in einer Druckluftleitung. Die Druckluftleitung, das Fadenleitrohr und das Fadeneinblasventil sind an einem Träger außen montiert.

Der Luftauslass des Fadeneinblasventils ist dem offenen Ende des Fadenleitrohres gegenüberliegend seitlich gegen dieses versetzt angeordnet, um ein seitliches Heranführen des Fadens an das offene Ende des Fadenleitrohrs zu gestatten. Durch die asymmetrische Anordnung ist die Bedienung bspw. für Rechtshänder festgelegt.

Gatter für Garnspulen werden in der Regel vor Ort aus vorgefertigten Teilen errichtet. Die Aufstellung und Einrichtung der Gatter mit allen erforderlichen Organen, wie bspw. auch Fadeneinblasventilen, soll auf einfache montagefreundliche Weise geschehen. Außerdem soll sich ein möglichst übersichtlicher Aufbau ergeben. Darüber hinaus gilt es zu beachten, dass Gatter, wie nahezu alle in Textilbetrieben vorhandene Einrichtungen, der Verschmutzung durch Flusablagerungen unterliegen. Auch diesen gilt es entgegenzuwirken.

Davon ausgehend ist es Aufgabe der Erfindung, ein einfach montierbares Fadeneinblasventil zu schaffen.

Diese Aufgabe wird mit den Merkmalen des Patentanspruchs 1 gelöst.

Das erfindungsgemäße Fadeneinblasventil ist wenigstens zweiteilig aufgebaut und in einen Grundkörper und ein Anschlussstück unterteilt. Diese sind über eine Kupplungseinrichtung miteinander verbindbar. Bei dieser geteilten Bauform ist das Anschlussstück vorzugsweise einer Druckluftleitung zugeordnet, und der Grundkörper ist vorzugsweise einem Fadenleitrohr zugeordnet. Damit kann das Anschlussstück zunächst in der Druckluftleitung separat montiert werden, bevor es an dem ebenfalls separat montierten Grundkörper angekuppelt wird. Dies vereinfacht die Montage. Außerdem gestattet die zweiteilige Ausführung die Verlegung der Druckluftleitung nebst Anschlussstücken z.B. im Inneren von Hohlprofilen oder auch einseitig offenen Profilen, wie U-Profilen oder dergleichen, die bspw. als Trägerelemente des Gatters dienen oder an diesen vorgesehen sind. Auf diese Weise lässt sich die Druckluftleitung unsichtbar verlegen. Der Gesamtaufbau wird dadurch glatter und es ergeben sich weniger schwer zugängliche Flächen oder Flächenbereiche, auf denen sich Ablagerungen ansammeln.

Die Kupplungseinrichtung bewirkt eine Verbindung eines in dem Anschlussstück vorgesehenen Luftzufuhrkanals mit einem in dem Grundkörper ausgebildeten Luftkanal und zusätzlich die mechanische Verbindung zwischen dem Anschlussstück und dem Grundkörper. Während das Anschlussstück dem Anschluss der bspw. aus Schläuchen gebildeten Druckluftleitung dient, ist an dem Grundkörper ein zu einer Blasdüse führendes Luftventil vorgesehen. Die beiden Teile des Fadeneinblasventils, d.h. der Grundkörper und das Anschlussstück, sind zu beiden Seiten einer Wand des Trägerelements angeordnet. Dabei ragt eine Kupplungshälfte bei einer Öffnung durch die Wand. Hierbei kommt es nicht wesentlich auf deren Genauigkeit und Präzision, Gratfreiheit, Formhaltigkeit usw. an. Es kann durchaus mehr oder weniger Spiel vorhanden sein, ohne die Funktion zu beeinträchtigen. Die zueinander vorzugsweise komplementären Kupplungshälften dichten unabhängig von der Größe und Präzision der genannten Öffnung fluiddicht miteinander ab.

Es wird als besonders zweckmäßig angesehen, die Kupplungshälften so auszubilden, dass die Kupplung lösbar ist. Damit ist eine einfache Demontage möglich. Eine lösbare Verbindung kann z.B. durch eine Schnappverbindung mit ein oder mehreren Rastzungen gebildet sein, die Teil der Kupplungshälften sind. Diese können ein mechanisches Sichern des Grundkörpers an dem Anschlussstück oder des Anschlussstücks an dem Grundkörper bewirken. Die Kupplungseinrichtung kann dabei zugleich der Festlegung des Fadeneinblasventils an dem Träger dienen, wenn bspw. der Träger, zwischen dem Anschlussstück und dem Grundkörper festgeklemmt wird. Alternativ können zusätzliche Befestigungsmittel an dem Grundkörper und/oder dem Anschlussstück vorgesehen sein. Die Befestigungsmittel können Schrauben, Rastzapfen, Schnappzungen oder dgl. sein.

Bei einer vorteilhaften Ausführungsform sind die Kupplungshälften wenigstens um einen beschränkten Drehbereich gegeneinander verdrehbar. Die Drehachse ist dabei im Wesentlichen quer zu dem Durchgangskanal und parallel zu dem Luftzufuhrkanal ausgerichtet. Dadurch können Schläuche zur Druckluftzuführung um die Fadenführungsröhrchen herumgeführt werden. Außerdem können die Druckluftschläuche, die meist etwas länger als erforderlich ausgebildet sind, im Kanal geschlängelt geführt werden. Durch die Drehbarkeit des Anschlussstücks kann dieses an die Schlauchführung angepasst werden.

Das Anschlussstück weist vorzugsweise einen Durchgangskanal auf, von dem der Luftzuführkanal abzweigt. Der Durchgangskanal ist mit vorzugsweise zwei Anschlüssen versehen, die es gestatten, mehrere Anschlussstücke hintereinander in eine Druckluftleitung zu legen. Die Anschlüsse können einfache Schlauchanschlüsse sein, auf die ein Luftschlauch aufgeschoben wird.

Das in dem Grundkörper angeordnete Ventilmittel ist vorzugsweise ein Kugelventil mit einer aus Kunststoff, bspw. Neopren, ausgebildeten Kugel. Diese ist von dem Betätigungsorgan getrennt, d.h. nicht mit diesem verbunden. Das Betätigungsorgan weist lediglich einen bei Betätigung die Kugel von ihrem Ventilsitz weg drückenden Stößel auf. Dadurch spielt seitliches Spiel des Betätigungsorgans für die Dichtheit des Ventils im geschlossenen Zustand keine Rolle. Zwischen dem Betätigungsorgan und dem Ventilverschlussglied ist im nichtbetätigten Zustand vorzugsweise ein gewisser Abstand vorhanden. Durch seitliche Krafteinwirkung auf den Bedienknopf oder nur ganz geringfügige Betätigung des Bedienknopfs wird das Ventil noch nicht geöffnet.

Das Betätigungsorgan kann durch Spaltdichtungen abgedichtet sein. Dies kann bspw. durch einen rippenartigen Vorsprung an dem Bedienknopf erreicht werden, der in entsprechende Ausnehmungen des Grundkörpers greift. Infolge dessen wird es möglich, dass bei Betätigung des Bedienelements keine Luft zum Bedienpersonal hin austritt. Der gedrückte Betätigungsknopf weist vorzugsweise einen Rand auf, der in eine Nut des Gehäuses greift. So wird eine Spaltdichtung ausgebildet, die verhindert, dass Druckluft in Richtung Bedienerseite ausströmt.

Durch die Trennung von Bedienelement und Ventilverschlussglied ist außerdem eine einfach Demontage, bspw. zur Reinigung, möglich. Das Betätigungsorgan (Bedienknopf) kann so gestaltet sein, dass es mit dem Grundkörper verrastet ist, wobei ein Rastelement, bspw. eine Rastzunge, von außen zugänglich ist, um den Bedienknopf von dem Grundkörper lösen zu können.

Vorzugsweise ist die Blasdüse als relativ langer Kanal mit gleichbleibender Querschnittsform ausgebildet, um den Austritt eines laminaren Luftstrahls zu ermöglichen. Dieser ist sehr gut gebündelt und bewirkt somit einen guten Fadeneintrag auch in lange Fadenleitrohre.

Vorzugsweise ist an dem Grundkörper eine Halterung für eine Fangdüse und einen Anschluss für das Fadenleitrohr vorgesehen. Diese Halterung kann bspw. eine Federklemme sein, die einstückig mit dem bspw. aus Kunststoff bestehenden Grundkörper ausgebildet ist. Die Federklemme gibt der Fangdüse und dem Fadenleitrohr eine Richtung vor, die vorzugsweise mit der Richtung der Blasdüse übereinstimmt. Die Richtung ist bei einer bevorzugten Ausführungsform im spitzen Winkel zu der Grundfläche des Grundkörpers angeordnet. Dadurch läuft das Fadenleitrohr schräg von dem Grundkörper weg in das Trägerprofil hinein. Es wird dadurch möglich, die Fadenleitrohre innerhalb von Trägerprofilen zu verlegen. Es ergibt sich, insbesondere wenn sowohl die Fadenleitrohre als auch die Druckluftleitungen in dem Trägerprofil angeordnet sind, ein besonders glatter einfacher Aufbau.

Weitere Einzelheiten vorteilhafter Ausführungsformen der Erfindung ergeben sich aus Unteransprüchen, aus der Zeichnung oder der Beschreibung.

In der Zeichnung sind Ausführungsbeispiele der Erfindung veranschaulicht. Es zeigen:
- Fig. 1: ein Trägerprofil mit einem daran vorgesehenen Fadeneinblasventil, in ausschnittsweiser perspektivischer und schematisierter Darstellung,
- Fig. 2: das Fadeneinblasventil nach Figur 1, in gesonderter perspektivischer Darstellung,
- Fig. 3: das Trägerprofil mit dem Fadeneinblasventil nach Figur 1, in längsgeschnittener Darstellung, in einem anderen Maßstab,
- Fig. 4: das Fadeneinblasventil nach Figur 2, in perspektivischer Darstellung, aus einer anderen Richtung gesehen,
- Fig. 5: das Fadeneinblasventil nach Figur 4, mit von dem Grundkörper getrenntem Anschlussstück, in perspektivischer Darstellung,
- Fig. 6: das Trägerprofil mit einem Fadeneinblasventil, von dem sein Anschlussstück entfernt ist, und

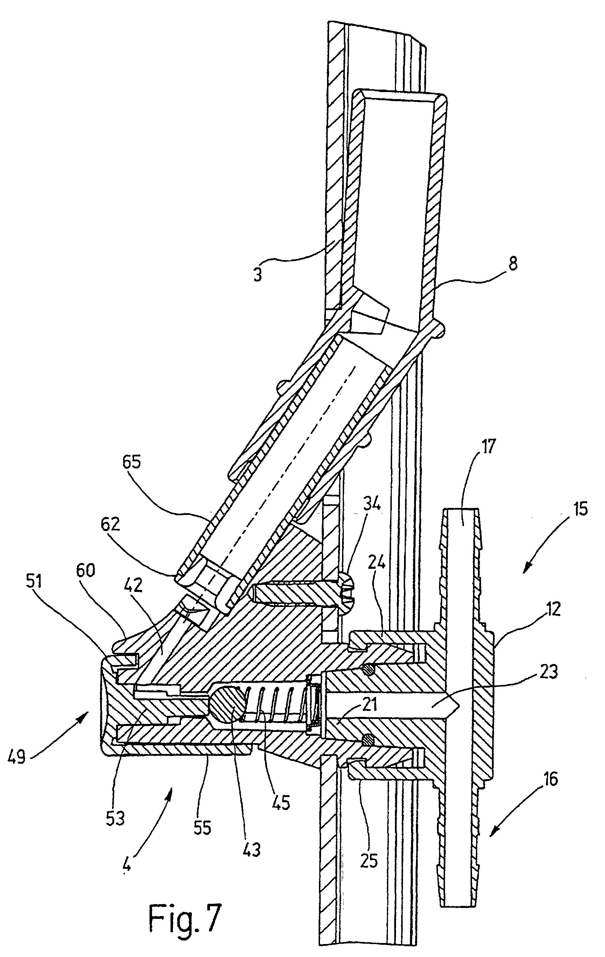

- Fig. 7: das an einem Trägerprofil montierte Fadeneinblasventil mit betätigtem Bedienknopf, in längsgeschnittener Darstellung.

### Beschreibung eines Ausführungsbeispiels

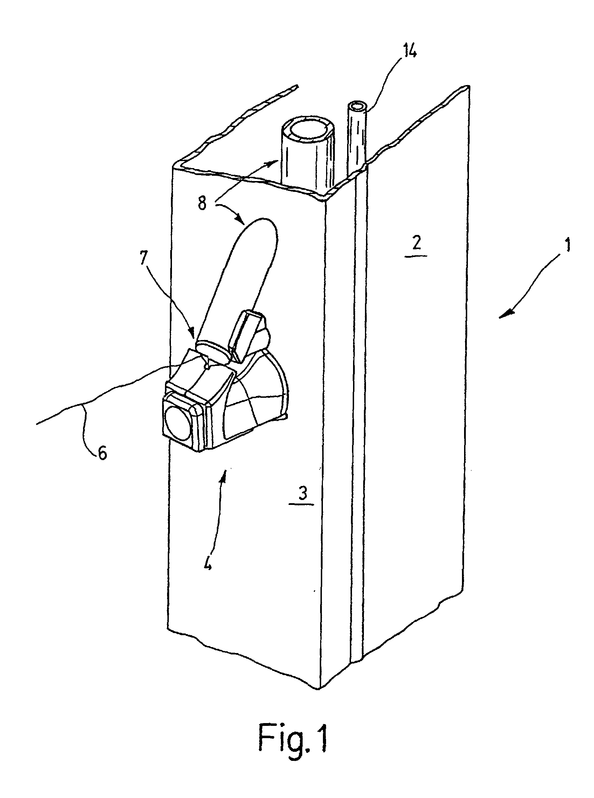

In Figur 1 ist ein Trägerelement 1 veranschaulicht, das an einem Spulengatter vorgesehen oder Teil desselben sein kann. Das Trägerelement 1 ist bspw. ein Kunststoffprofil, wie es als Kabelkanal auch anderweitig Anwendung finden kann. Das Kunststoffprofil kann geschlossen oder als U-Profil offen sein. Außerdem kann es einen rinnenförmigen Grundkörper 2 und eine zugehörige Abdeckwand 3 aufweisen, die mit dem Grundkörper 2 verrastet wird, um ein geschlossenes Profil zu bilden.

An dem Trägerprofil 1 ist ein Fadeneinblasventil 4 angeordnet, mit dem ein Ende eines von einer nicht weiter dargestellten Garnspule kommenden Fadens 6 in ein offenes Ende 7 eines Fadenleitrohrs 8 einblasbar ist. Das Fadenleitrohr 8 erstreckt sich von dem Fadeneinblasventil 4, das in der Nähe der Garnspule an einem Spulengatter angeordnet ist, bis in die Nähe eines fadenabnehmenden Geräts, bspw. eines Fadenliefergeräts. Das Fadenleitrohr 8 lagert und führt den Faden 6. Wie in Figur 1 veranschaulicht, verläuft das Fadenleitrohr 8 dabei weitgehend in dem Innenraum des Trägerprofils 1. Die Außenseite desselben ist dadurch frei von Rohrleitungen.

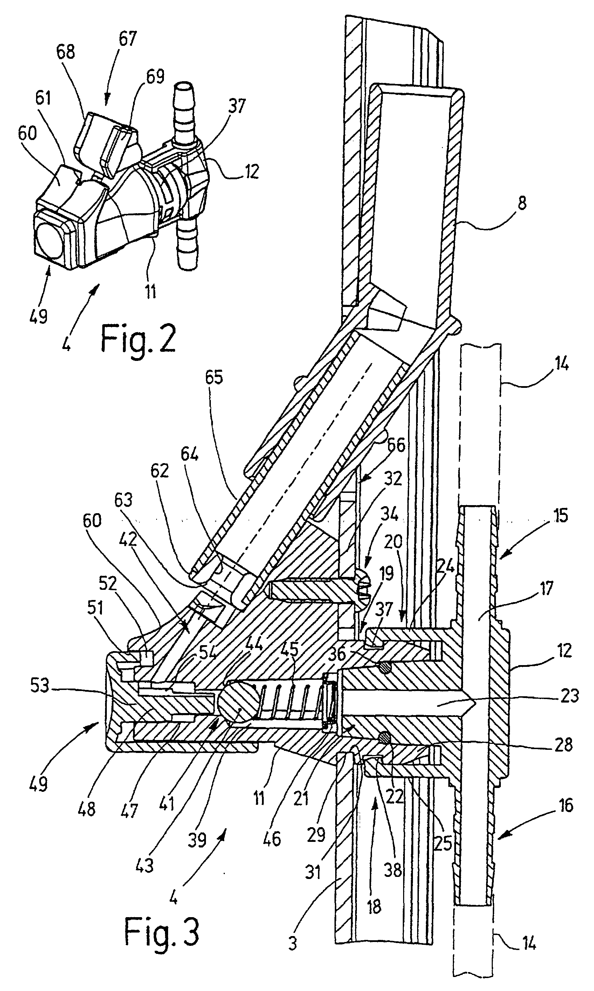

In Figur 2 ist das Fadeneinblasventil 4 gesondert veranschaulicht. Außerdem geht es aus Figur 3 hervor. Wie ersichtlich, ist das Fadeneinblasventil 4 in einen Grundkörper 11 und ein zugehöriges Anschlussstück 12 unterteilt, das dem Anschluss einer in Figur 3 lediglich schematisch angedeuteten und aus Figur 1 ersichtlichen Druckluftleitung 14 dient. Zum Anschluss derselben weist das Anschlussstück 12 an einander gegenüberliegenden Seiten zwei außen jeweils profilierte rohrförmige Fortsätze 15, 16 auf, die untereinander durch einen Durchgangskanal 17 verbunden sind.

Das Anschlussstück 12 ist mittels einer Kupplungseinrichtung 18 mit dem Grundkörper 11 verbunden. Zu der Kupplungseinrichtung 18 gehören eine grundkörperseitige Kupplungshälfte 19 und eine anschlussstückseitige Kupplungshälfte 20. Beide Kupplungshälften 19, 20 sind zueinander komplementär ausgebildet, so dass sie ineinander passen. Zur Ausbildung der Kupplungshälfte 20 weist das Anschlussstück 12 einen rohrförmigen Ansatz 21 auf, der an seinem freien Ende konisch verjüngt ist. Im Anschluss an seinen konischen Bereich ist an dem Ansatz 21 eine Ringnut mit einem darin sitzenden O-Ring 22 vorgesehen, der als Dichtung dient. Der rohrförmige Ansatz 21 begrenzt außerdem einen Luftzufuhrkanal 23, der von dem Durchgangskanal 17 abzweigt und an dem freien Ende des Ansatzes 21 mündet.

Zur mechanischen Fixierung des Anschlussstücks 12 an dem Grundkörper 11 und um die Kupplungshälften 19, 20 in fluiddicht gekuppeltem Zustand zu halten, sind an dem Anschlussstück 12 zwei sich etwa parallel zu dem Ansatz zu dem Grundkörper 11 hin erstreckende Federzungen 24, 25 vorgesehen, die an ihrem freien Ende jeweils mit einer Rastnase versehen sind. Die Federzungen 24, 25 sind einstückig mit dem Anschlussstück 12 ausgebildet, das bspw. aus Kunststoff besteht. Sie sind von dem Ansatz 21 weg und auf diesen hin federnd auslenkbar.

Die zu dem Grundkörper 11 gehörige Kupplungshälfte 19 weist ebenfalls einen rohrförmigen Ansatz 28 auf, der das Verschluss- oder Abdeckwand 3 bei einer Montageöffnung 29 durchgreift. Der rohrförmige Ansatz 28 ist dabei an wenigstens einer Seite mit einer nutartigen Ausnehmung 31 versehen, die die Abdeckwand 3 an ihrer Öffnung 29 hintergreift. Ansonsten liegt der Grundkörper 11 mit einer Planfläche 32 an der Abdeckwand 3 an. Bedarfsweise kann er durch ein Befestigungselement, wie bspw. eine Schraube 34, an der Abdeckwand 3, gesichert sein.

Der rohrförmige Fortsatz 28 der Kupplungshälfte 19 durchragt die Abdeckwand 3 und weist eine Öffnung auf, die komplementär zu der Außenform des Fortsatzes 21 ausgebildet ist. Etwa auf Höhe des O-Rings 22 ist in der Öffnung des Ansatzes 28 eine Ringschulter 36 ausgebildet, die an dem O-Ring 22 abdichtet. Darüberhinaus passt der Ansatz 28 soweit auf den Fortsatz 21, dass dieser fest darin sitzt. An seiner Außenseite ist der Ansatz 28 mit Rasttaschen 37, 38 versehen, in die die Rastnasen der Federzungen 24, 25 eingreifen, wenn die Kupplungshälften 19, 20 miteinander in Eingriff sind. Damit bilden die Rasttaschen 37, 38 und die Rastzungen 24, 25 eine mechanische Verbindungseinrichtung für den Grundkörper 11 und das Anschlussstück 12.

In dem Grundkörper 11 ist ein Luftkanal 39 ausgebildet, der von der Kupplungshälfte 19 zu einem Kugelventil 41 und von diesem zu einer Blasdüse 42 führt. Das Kugelventil 41 ist durch eine Kunststoffkugel 43 gebildet, die als Ventilverschlussglied dient und der eine vorzugsweise konische Ringfläche 44 als Ventilsitz zugeordnet ist. Die Kugel 43 wird durch eine Schraubenfeder 45 gegen die Ringfläche 44 gedrückt, wobei sich die Schraubenfeder 45 an einem in dem Luftkanal 39 sitzenden Sicherungselement 46 abstützt. Das Sicherungselement 46 stützt sich dabei mit schräg zur Radialrichtung angeordneten Fortsätzen an der glatten Wandung des Luftkanals 39 ab und ist dadurch am Platz gehalten.

Ausgehend von der Ringfläche 44 erstreckt sich der Luftkanal 39 in eine Stufenbohrung 47 hinein, in der ein Schaft 48 eines Betätigungsorgans sitzt. Dieses wird durch einen Bedienknopf 49 gebildet. Der Bedienknopf 49 weist einen umlaufenden Rand 51 auf, der in eine entsprechende, etwa passende Ausnehmung 52 des Grundkörpers greift. Zwischen dem Bund oder Rand 51 und der Ausnehmung 52 ist sowohl nach außen als auch nach innen jeweils ein relativ enger Spalt ausgebildet. Das bedienknopfseitige Ende der den Kanal 39 bildenden Stufenbohrung ist von einem im Durchmesser mit dem Luftkanal 39 etwa übereinstimmenden Ende 53 des sich von dem Bedienknopf 49 weg erstreckenden Schafts 48 so verschlossen, dass allenfalls ein relativ enger Spalt zwischen der Bohrung und dem Ende 53 verbleibt. Der Schaft 48 erstreckt sich dann mit etwas geringerem Durchmesser und/oder einer zum Zwecke des Luftdurchlasses vorgesehenen Längsausnehmung 54 zu der Kugel 43. Dabei ist der Schaft 48 so kurz bemessen, dass zwischen der Kugel 43 und dem stirnseitigen Ende des Schafts 48 ein Abstand verbleibt, wenn der Bedienknopf 49 nicht betätigt wird.

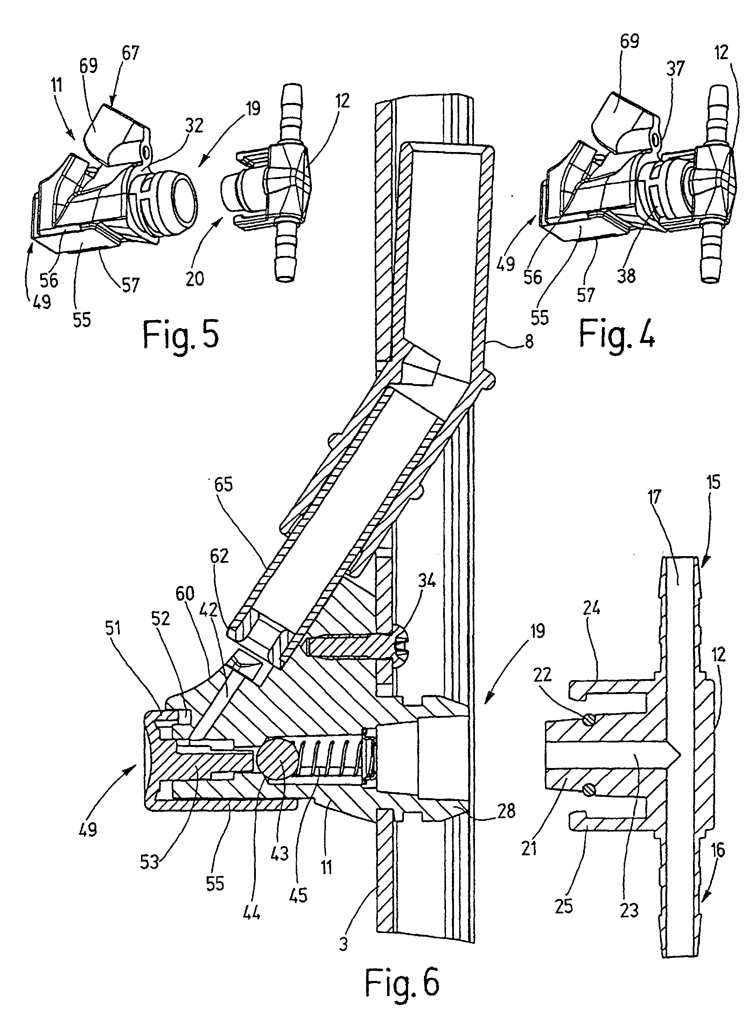

An einer Seite ist der Bedienknopf 49 mit einer Sicherungszunge 55 versehen, die bspw. aus den Figuren 4 und 5 ersichtlich wird. Die Sicherungszunge 55 weist einen T-förmigen Kopf auf, der hinter entsprechende Führungs- und Anschlagrippen 56, 57 des Grundkörpers 11 greift. Diese sind parallel zu der Sicherungszunge 55 zu beiden Seiten derselben an dem Grundkörper 11 ausgebildet. Die Sicherungszunge 55 kann aus der zwischen beiden Führungsrippen 56, 57 definierten Bahn herausgehoben werden, um den Bedienknopf 49 von dem Grundkörper 11 abnehmen zu können. Im entspannten Zustand liegt sie jedoch an dem Grundkörper 11 an und hält den Bedienknopf 49 unverlierbar und in Längsrichtung verschiebbar an dem Grundkörper 11.

Die von dem Luftkanal 39 abzweigende Blasdüse 49 wird durch einen relativ engen bspw. zylindrischen Kanal gebildet, dessen Mittelachse mit der Planfläche 32 einen spitzen Winkel einschliesst. Damit bläst aus der Blasdüse 42 austretende Luft schräg auf die Abdeckwand 3 hin. Die Blasdüse liegt in einigem Abstand zu dem Bedienknopf 49 an einem Ende einer konkav gewölbten Fläche 60, die in einer schmalen Kante 61 ausläuft. In der Kante 61 ist ein trichterartiger Ausschnitt oder eine Kerbe ausgebildet, an deren Grund die Mündung der Blasdüse 42 liegt. Dies dient der Erzeugung eines gerichteten Luftstrahls zum Eintragen des Fadens 6 in das Fadenleitrohr 8. Die Kerbe nimmt auch einen Teil aus der gewölbten Fläche 60 aus, so dass die Blasdüse 42 in unmittelbarer Nachbarschaft der Fläche 60 mündet. Dadurch können Fäden sehr leicht und ungehindert an die Blasdüse 42 herangeführt werden.

Der Blasdüse 42 gegenüberliegend ist eine Fangdüse 62 angeordnet, die einen sich gewölbt trichterartig verengenden Eintrittsbereich 63 und einen sich daran anschliessenden zylindrischen Bereich 64 aufweist. Die Fangdüse 62 sitzt in einem Leitröhrchen 65, dessen Mittelachse mit der Achse der Blasdüse 42 übereinstimmt. Die Fläche 60 lässt jedoch einen Teil des Eintrittsbereichs 63 der Fangdüse 62 frei, so dass ein Faden in den zwischen der Fangdüse 62 und der Blasdüse 42 ausgebildeten Saugspalt eingeführt werden kann. Dies kann sowohl von rechts als auch von links her geschehen, so dass das Blasventil 4 nicht auf die Bedienung durch Rechts- oder Linkshänder beschränkt ist.

Das Leitröhrchen 65 steckt mit seinem von der Blasdüse 42 abliegenden Ende in dem Fadenleitrohr 8, das in dem Trägerprofil 1 angeordnet ist und durch eine entsprechende Öffnung 66 nach außen ragt. Zur ortsfesten Lagerung des Leitröhrchens 65 und zur lagerichtigen Fixierung der Fangdüse 62 in Bezug auf den Grundkörper 11 dient eine Federklemme 67, die aus Figur 2 hervorgeht und Teil des Grundkörpers 11 ist. Die Federklemme 67 weist zwei in Gebrauch das Leitröhrchen 65 umgreifende Schenkel 68, 69 auf, die zwischeneinander das Leitröhrchen 65 fest- bedarfsweise jedoch lösbar halten.

Das insoweit beschriebene Fadeneinblasventil 4 arbeitet wie folgt:

In montiertem Zustand ist das Fadeneinblasventil in den Figuren 1 und 3 veranschaulicht. Die Feder 45 drückt die Kugel 43 an die Ringfläche 44, so dass der Luftkanal 39 verschlossen ist. Das Bedienelement 49 liegt mit seinem Schaft 48 nicht an der Kugel 43 an. Das Anschlussstück 12 ist an den Grundkörper 11 angekoppelt, womit die Kupplungshälften 19, 20 miteinander im Eingriff stehen. Die Rastzungen 24, 25 halten das Anschlussstück 12 an dem Grundkörper 11. Über die Druckluftleitung 14 liegt Druckluft an dem Durchgangskanal 17 und somit an dem Luftzuführungskanal 23 an. Jedoch versperrt die Kugel 43 der Druckluft den Zugang zu der Blasdüse 42.

Soll nun ein Faden in das Fadenleitrohr 8 eingeblasen werden, wird das freie Ende des Fadens in die Nähe des zwischen der Fangdüse 62 und der Blasdüse 42 ausgebildeten Saugspalts gebracht. Wird nun der Bedienknopf 49 betätigt, indem er gedrückt wird, hebt der Schaft 48 die Kugel 43 von der Ringfläche 44 ab. Damit dringt Druckluft durch die Blasdüse vor und tritt dort als scharfer Luftstrahl aus, der in die Fangdüse 62 und das Leitröhrchen 65 einströmt. Der sich ausbildende Sog führt zu einer relativ starken Luftströmung über die gewölbte Fläche 60, die das Fadenende in den Saugspalt und das Leitröhrchen 65 einsaugt. Der Luftstrahl bläst nun den Faden durch das Leitrohr 8. Mit anderen Worten, die von der Blasdüse 42 ausgehende Luftströmung führt durch das gesamte Leitrohr 8 und trägt den Faden mit sich.

Ist der Bedienknopf 49 gedrückt, bleibt der Luftkanal 49 nach außen hin relativ gut abgedichtet. Der Bedienknopf 49 bildet eine dreifache Spaltdichtung mit zwei Pufferräumen. Der erste Pufferraum ist unterhalb des Bedienknopfs 49 definiert, während der zweite Pufferraum zwischen dem Bund oder der Rippe 51 und der entsprechenden Ausnehmung 52 begrenzt ist. Auf diese Weise steht nahezu der gesamte Luftdruck und die gesamte Druckluftmenge, die aus der Druckluftleitung 14 ausgeleitet wird, für die Blasdüse 42 zur Verfügung. Dies ergibt eine gute Blaswirkung. Andererseits ist es möglich, mit relativ großen Toleranzen zu arbeiten. Durch die dreifache Hintereinanderanordnung der Spaltdichtungen können auch etwas weitere Spaltweiten vertragen werden, ohne dass es zu allzu großen Luftverlusten kommt.

Ein Fadeneinblasventil 9 ist zweiteilig aufgebaut, wobei es in einen Grundköper 11 und ein Anschlussstück 12 unterteilt ist. Dies gestattet es, auf einfache Weise eine Druckluftleitung 14 hinter einer Abdeckwand 3 anzuordnen, die von dem Blasventil durchgriffen wird. Um die Montage durch Verbindung des Grundkörpers 11 mit dem Anschlussstück 12 zu ermöglichen, ist zwischen beiden eine Kupplungseinrichtung vorgesehen.

## Patentansprüche

1. Fadeneinblasventil (4), insbesondere zum Einblasen von Fäden (6) in Fadenleitrohre (8),
mit einem Grundkörper (11) an dem eine Blasdüse (42) vorgesehen ist, die über ein Betätigungsorgan (49) gesteuert mit einem Luftkanal (39) verbindbar ist,
mit einem Anschlussstück (12), das mit einem Luftzufuhrkanal (23) versehen ist,
**dadurch gekennzeichnet, daß** zur Verbindung des Grundkörpers (11) mit dem Anschlussstücks (12) eine Kupplungseinrichtung (18) vorgesehen ist, zu der eine an dem Grundkörper vorgesehene Kupplungshälfte (19) und eine an dem Anschlussstück (12) vorgesehene Kupplungshälfte (20) gehören, die in gekuppeltem Zustand mechanisch aneinander gehalten sind und zwischen dem Luftzufuhrkanal (23) und dem Luftkanal (39) eine Fluidverbindung herstellen.

2. Fadeneinblasventil nach Anspruch 1, **dadurch gekennzeichnet, dass** die Kupplungshälften (19, 20) zueinander komplementär ausgebildet sind.

3. Fadeneinblasventil nach Anspruch 1, **dadurch gekennzeichnet, dass** die Kupplungshälften (19, 20) miteinander lösbar verbunden sind miteinander vorzugsweise eine Schnappverbindung bilden.

4. Fadeneinblasventil nach Anspruch 1, **dadurch gekennzeichnet, dass** die Kupplungshälften (19, 20) gegeneinander verdrehbar gehalten sind.

5. Fadeneinblasventil nach Anspruch 1, **dadurch gekennzeichnet, dass** zu der Kupplungseinrichtung (18) Rastmittel (24, 25, 37, 38) gehören, mit denen die beiden Kupplungshälften (19, 20) in eingekuppeltem Zustand mechanisch aneinander gesichert sind.

6. Fadeneinblasventil nach Anspruch 5, **dadurch gekennzeichnet, dass** zu den Rastmitteln (24, 25, 37, 38) wenigstens eine federnd angeordnete Rastzunge (24, 25) gehört, die an einer Kupplungshälfte (20) angeordnet ist und die an ihrem freien Ende eine Rastnase aufweist, und dass die andere Kupplungshälfte (19) wenigstens eine Ausnehmung (37, 38) zur Aufnahme der Rastnase aufweist.

7. Fadeneinblasventil nach Anspruch 1, **dadurch gekennzeichnet, dass** zu der an dem Grundkörper (11) ausgebildeten Kupplungshälfte (19) ein rohrförmiger Fortsatz gehört, der von einer im wesentlichen plan ausgebildeten Anlagefläche (32) des Grundkörpers weg ragt und in dem der Luftkanal (39) endet.

8. Fadeneinblasventil nach Anspruch 7, **dadurch gekennzeichnet, dass** zu der zu dem Anschlussstück (12) gehörigen Kupplungshälfte (20) ein rohrförmiger Fortsatz (21) gehört, in dem der Luftzuführkanal (23) endet und der in den rohrförmigen Fortsatz (28) der anderen Kupplungshälfte (19) einführbar ist, wobei der einführbare rohrförmige Fortsatz (21) mit einer Dichtung (22) versehen ist, die eine nach außen fluiddichte Verbindung zwischen dem Luftkanal (39) und dem Luftzufuhrkanal (23) sicherstellt, wenn die Kupplungshälften (19, 20) miteinander gekuppelt sind.

9. Fadeneinblasventil nach Anspruch 1, **dadurch gekennzeichnet, dass** an dem Anschlussstück (12) Befestigungsmittel ausgebildet sind, die eine ortsfeste Lagerung des Anschlussstücks (12) an oder in einem Trägerelement (3) gestatten.

10. Fadeneinblasventil nach Anspruch 1, **dadurch gekennzeichnet, dass** das Anschlussstück (12) einen Durchgangskanal (17) aufweist, von dem der Luftzufuhrkanal (23) abzweigt und der vorzugsweise zwei einander gegenüberliegende Anschlüsse (15, 16) aufweist.

11. Fadeneinblasventil nach Anspruch 1, **dadurch gekennzeichnet, dass** in dem Grundkörper (11) ein den Luftkanal durch Betätigung des Betätigungsorgans (49) wahlweise freigebendes und sperrendes Ventilmittel (43) angeordnet ist, das vorzugsweise als Kugelventil ausgebildet ist und dessen Ventilverschlussglied mit dem Betätigungsorgan unverbunden ist, wobei das Betätigungsorgan (49) vorzugsweise mit wenigstens einer Dichteinrichtung zur Abdichtung des Luftkanals gegen die Umgebung versehen ist.

12. Fadeneinblasventil nach Anspruch 1, **dadurch gekennzeichnet, dass** der Grundkörper (11) mit einer Befestigungseinrichtung (34) zur ortsfesten Halterung an einem Träger (3) versehen ist.

13. Fadeneinblasventil nach Anspruch 1, **dadurch gekennzeichnet, dass** die an dem Grundkörper (11) angeordnete Luftaustritts- oder Blasdüse (42) gegen eine von einer Grundfläche (32) des Grundkörpers (32) festgelegte Montageebene geneigt angeordnet ist.

14. Fadeneinblasventil nach Anspruch 1, **dadurch gekennzeichnet, dass** an dem Grundkörper (11) eine Fangdüse (62) angeordnet ist, die vorzugsweise lösbar an dem Grundkörper (11) gehalten ist.

15. Fadeneinblasventil nach Anspruch 14, **dadurch gekennzeichnet, dass** zur Halterung der Fangdüse (62) an dem Grundkörper (11) eine Federklemme (67) ausgebildet ist und dass die Fangdüse (62) in das Fadenleitrohr (8) einsteckbar ausgebildet ist.

## Claims

1. A yarn injection valve (4), in particular for injecting yarns (6) into thread-guide tubes (8),
having a body member (11) on which there is provided a blast nozzle (42) which can be connected in a controlled manner to an air duct (39) via an actuating member (49),
having a connecting piece (12) which is provided with an air supply duct (23),
**characterised in that** to connect the body member (11) to the connecting piece (12) a coupling means (18) is provided, with which are associated a coupling half (19) provided on the body member and a coupling half (20) provided on the connecting piece (12), which coupling halves are retained mechanically on one another in the coupled condition and establish a fluid connection between the air supply duct (23) and the air duct (39).

2. A yarn injection valve according to Claim 1, **characterised in that** the coupling halves (19,20) are designed to be complementary to one another.

3. A yarn injection valve according to Claim 1, **characterised in that** the coupling halves (19,20) are releasably joined together and preferably form a snap-fit connection.

4. A yarn injection valve according to Claim 1, **characterised in that** the coupling halves (19,20) are retained rotatably with respect to one another.

5. A yarn injection valve according to Claim 1, **characterised in that** the coupling means (18) are associated with locating means (24,25,37,38), with which the two coupling halves (19,20) are mechanically secured on one another in the coupled condition.

6. A yarn injection valve according to Claim 5, **characterised in that** the locating means (24,25,37,38) are associated with at least one resiliently mounted locating tongue (24,25) which is disposed on one coupling half (20) and which has a locating projection on its free end, and **in that** the other coupling half (19) has at least one recess (37,38) to receive the locating projection.

7. A yarn injection valve according to Claim 1, **characterised in that** the coupling half (19) formed on the body member (11) is associated with a tubular extension which projects away from a substantially flat abutment surface (32) of the body member and in which the air duct (39) terminates.

8. A yarn injection valve according to Claim 7, **characterised in that** the coupling half (20) associated with the connecting piece (12) is associated with a tubular extension (21) in which the air supply duct (23) terminates and which can be inserted into the tubular extension (28) of the other coupling half (19), wherein the insertable tubular extension (21) is provided with a seal (22) which ensures an outwardly fluidtight connection between the air duct (39) and the air supply duct (23) when the coupling halves (19,20) are coupled to one another.

9. A yarn injection valve according to Claim 1, **characterised in that** the fastening means are formed on the connecting piece (12), which make possible a stationary mounting of the connecting piece (12) on or in a support member (3).

10. A yarn injection valve according to Claim 1, **characterised in that** the connecting piece (12) has a passage duct (17) from which the air supply duct (23) branches off and which preferably has two mutually opposed connections (15,16).

11. A yarn injection valve according to Claim 1, **characterised in that** a valve means (43), which optionally releases and closes the air duct by actuation of the actuating member (49), is disposed in the body member (11), which valve means is preferably in the form of a ball valve and the valve closing member of which is not connected with the actuating member, wherein the actuating member (49) is preferably provided with at least one sealing means for sealing off the air duct from the environment.

12. A yarn injection valve according to Claim 1, **characterised in that** the body member (11) is provided with a fastening means (34) for the stationary mounting on a support (3).

13. A yarn injection valve according to Claim 1, **characterised in that** the air outlet nozzle or blast nozzle (42) disposed on the body member (11) is arranged inclined with respect to a mounting plane located by a base surface (32) of the body member (11).

14. A yarn injection valve according to Claim 1, **characterised in that** a receiving nozzle (62) is disposed on the body member (11), which is preferably releasably retained on the body member (11).

15. A yarn injection valve according to Claim 14, **characterised in that** a spring clip (67) is formed on the body member (11) for retaining the receiving nozzle (62), and **in that** the receiving nozzle (62) is designed so that it can be inserted into the thread-guide tube (8).

## Revendications

1. Soupape d'injection de fil (4), notamment pour l'injection de fils (6) dans des tubes guide-fils (8),
- avec un corps de base (11) portant une buse soufflante (42) qui peut être mise en communication de manière contrôlée avec un conduit d'air (39) par l'intermédiaire d'un organe d'actionnement (49),
- avec une pièce de raccordement (12) qui est pourvue d'un canal d'entrée d'air (23),
**caractérisée en ce qu'**il est prévu pour relier le corps de base (11) à la pièce de raccordement (12) un dispositif de raccord (18) avec une moitié de raccord (19) disposée sur le corps de base et une moitié de raccord (20) disposée sur la pièce de raccordement (12), qui, dans la position de couplage, sont assemblées mécaniquement l'une avec l'autre et réalisent une liaison de fluide entre le canal d'entrée d'air (23) et le conduit d'air (39).

2. Soupape d'injection de fil selon la revendication 1, **caractérisée en ce que** les moitiés de raccord (19, 20) sont mutuellement complémentaires.

3. Soupape d'injection de fil selon la revendication 1, **caractérisée en ce que** les moitiés de raccord (19, 20) sont assemblées Tune avec l'autre de manière démontable et forment entre elles de préférence une liaison encliquetable.

4. Soupape d'injection de fil selon la revendication 1, **caractérisée en ce que** les moitiés de raccord (19, 20) sont tenues avec possibilité de rotation l'une par rapport à l'autre.

5. Soupape d'injection de fil selon la revendication 1, **caractérisée en ce que** le dispositif de raccord (18) comprend des moyens d'encliquetage (24, 25, 37, 38) par lesquels les deux moitiés de raccord (19, 20) sont fixées mécaniquement Tune à l'autre dans la position de couplage.

6. Soupape d'injection de fil selon la revendication 5, **caractérisée en ce que** les moyens d'encliquetage (24, 25, 37, 38) comprennent au moins une languette d'encliquetage (24, 25) élastique qui est disposée sur l'une (20) des moitiés de raccord et porte un ergot d'encliquetage à son extrémité libre et **en ce que** l'autre (19) moitié de raccord présente au moins un évidement (37, 38) pour recevoir l'ergot d'encliquetage.

7. Soupape d'injection de fil selon la revendication 1, **caractérisée en ce que** la moitié de raccord (19) appartenant au corps de base (11) comprend un prolongement tubulaire qui s'étend à partir d'une surface d'appui (32) essentiellement plane du corps de base et se termine dans le conduit d'air (39).

8. Soupape d'injection de fil selon la revendication 7, **caractérisée en ce que** la moitié de raccord (20) appartenant à la pièce de raccordement (12) comporte un prolongement tubulaire (21) dans lequel débouche le canal d'entrée d'air (23) et qui peut être engagé dans le prolongement tubulaire (28) de l'autre moitié de raccord (19), le prolongement tubulaire (21) à insérer étant pourvu d'un joint (22) qui assure un raccordement étanche au fluide vis-à-vis de l'extérieur entre le conduit d'air (39) et le canal d'entrée d'air (23), lorsque les moitiés de raccord (19, 20) sont couplées l'une à l'autre.

9. Soupape d'injection de fil selon la revendication 1, **caractérisée en ce que** la pièce de raccordement (12) comporte des moyens de fixation qui permettent un montage stationnaire de ladite pièce de raccordement (12) sur ou dans un élément support (3).

10. Soupape d'injection de fil selon la revendication 1, **caractérisée en ce que** la pièce de raccordement (12) comporte un canal traversant (17) duquel part le canal d'entrée d'air (23) et qui présente de préférence deux embouts (15, 16) mutuellement en vis-à-vis.

11. Soupape d'injection de fil selon la revendication 1, **caractérisée en ce que** dans le corps de base (11) est monté un moyen formant soupape (43), conformé de préférence en soupape à bille et dont l'obturateur est indépendant de l'organe d'actionnement, qui selon le cas libère ou bloque le conduit d'air lorsqu'on agit sur l'organe d'actionnement (49), l'organe d'actionnement (49) de préférence étant muni d'un dispositif d'étanchéité assurant l'étanchéité du conduit d'air vis-à-vis de l'extérieur.

12. Soupape d'injection de fil selon la revendication 1, **caractérisée en ce que** le corps de base (11) est pourvu d'un dispositif de fixation (34) pour la fixation stationnaire à un support (3).

13. Soupape d'injection de fil selon la revendication 1, **caractérisée en ce que** la buse de sortie d'air ou buse soufflante (42) montée sur le corps de base (11) est inclinée par rapport à un plan de montage défini par une surface de base (32) du corps de base (32).

14. Soupape d'injection de fil selon la revendication 1, **caractérisée en ce qu'**une buse de captage (62) est montée sur le corps de base (11), laquelle buse de captage, de préférence, est fixée de manière démontable au corps de base (11).

15. Soupape d'injection de fil selon la revendication 14, **caractérisée en ce qu'**il est prévu une pince à ressort (67) pour la fixation de la buse de captage sur le corps de base (11) et **en ce que** la buse de captage (62) peut être enfoncée dans le tube guide-fil (8).
